# EUROPEAN PATENT APPLICATION

(11) **EP 4 154 734 A1**
(43) Date of publication of application: **29.03.2023**
(21) Application number: 21217978.2
(22) Date of filing: 28.12.2021
(51) Int. Cl.: A23P 10/40, A23P 30/00, A23L 3/26

(54) **DATE PALM LEAF REFERENCE MATERIAL AND USE THEREOF**

(71) Applicant: King Khalid University, 62529 Abha (SA)
(72) Inventor: Idris, Abubakr M., PO Box 9004, Abha 61413 (SA); Fawy, Khalid F., . (SA); Ebrahim, Ammar M., PO Box 400, AlAhssa 31982 (SA)
(74) Representative: Engelhard, Markus

(57) **Abstract**

The invention relates to a composition comprising a date palm leaf or component(s) thereof, wherein said composition is a homogenized, irradiated composition. The invention further relates to a use of a composition comprising a date palm leaf or component(s) thereof as a reference material. The invention also relates to a method of preparing a homogenized, irradiated composition comprising a date palm leaf or component(s) thereof.

## Description

### FIELD OF THE INVENTION

The invention relates to a composition comprising a date palm leaf or component(s) thereof, wherein said composition is a homogenized, irradiated composition. The invention further relates to a use of a composition comprising a date palm leaf or component(s) thereof as a reference material. The invention also relates to a method of preparing a homogenized, irradiated composition comprising a date palm leaf or component(s) thereof. The inventors extend their appreciation to the Deputyship for Research & Innovation, Ministry of Education in Saudi Arabia for funding this work through the project number IFP-KKU-2020/4.

### BACKGROUND OF THE INVENTION

Public confidence in the results of measurement is important in many aspects of modern society, including consumer protection in food consumption, health-care, environmental protection and fair trade. Reference materials (RM), particularly certified reference materials (CRMs), are the cornerstones of the quality of measurements. CRMs allow for accreditation process for laboratories, instrument calibration, testing validity of tools used in chemical analysis, validation of analytical methods, examination of infrequently used methods, troubleshooting in chemical analysis, verification of the correct use of an analytical method, and calibration of analytical systems. For example, CRMs can be used to ensure the quality of food analytical results for the purposes of monitoring food safety and food quality as well as environmental monitoring.

Generally the demand for reference materials exceeds the reference material supply in terms of the range of materials along with matrices and the levels of certified analytes thereof. For many materials such as particular leaf types, no corresponding reference material or only a limited selection of reference materials is available. The user has to choose the most suitable reference material available for a sample material to be analyzed, in terms of matrices and the levels of certified analytes thereof, and often has no choice of alternative RMs. Thus, in cases in which there is no corresponding reference material available for a sample material to be analyzed, the user has to select a reference material for a material that is similar to the sample material to be analyzed. However, the use of reference materials which do not correspond to the sample material to be analyzed limits the accuracy of the analysis. When a reference material for a first leaf type is used for analyzing a second leaf type since a reference material for the second leaf type is not available, the result of the analysis may be imprecise, e.g. due to differences in the matrices of the first leaf type and the second leaf type. Thus, a suitable reference material for each of a broad spectrum of materials is needed.

For example, there is a lack of available reference materials of date palm leaf. In particular, there is a lack of suitable reference materials for analyzing leaves of date palms e.g. of *Phoenix dactylifera* L. Thus, there is the need to provide reference materials for leaves of date palms such as *Phoenix dactylifera* L. Furthermore, there is the need to provide certified reference materials for leaves of date palms which allow to analyze food quality and/or environmental pollution of date palms. There is also the need to provide methods of preparing a standardized composition comprising date palm leaf.

### SUMMARY OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the present invention relates to a composition comprising a date palm leaf or component(s) thereof, wherein said composition is a homogenized, irradiated composition.

In one embodiment, said composition is a powder, granules, pulp, paste, dispersion, or suspension, preferably a powder.

In one embodiment, said composition is a composition irradiated with ionizing irradiation, preferably gamma ray irradiation, x-ray irradiation, and/or electron beam irradiation.

In one embodiment, said composition comprises
Na in an amount of from 750 µg/g to 1200 µg/g, preferably 820 µg/g to 1115 µg/g, e.g. about 830 µg/g to about 1100 µg/g;
Mg in an amount of from 900 µg/g to 2200 µg/g, preferably 1020 µg/g to 2000 µg/g, e.g. about 1040 µg/g to about 1960 µg/g;
P in an amount of from 280 µg/g to 450 µg/g, preferably 300 µg/g to 430 µg/g, e.g. about 315 µg/g to about 410 µg/g;
K in an amount of from 400 µg/g to 6000 µg/g, preferably 515 µg/g to 5860 µg/g, e.g. about 2380 µg/g to about 3290 µg/g;
Ca in an amount of from 900 µg/g to 16000 µg/g, preferably 960 µg/g to 15150 µg/g, e.g. about 970 µg/g to about 15000 µg/g;
Cr in an amount of from 6 µg/g to 15 µg/g, preferably 7 µg/g to 13.4 µg/g, e.g. about 7.2 µg/g to about 13.0 µg/g;
Mn in an amount of from 70 µg/g to 98 µg/g, preferably 72 µg/g to 95 µg/g, e.g. about 73 µg/g to about 94 µg/g;
Fe in an amount of from 400 µg/g to 850 µg/g, preferably 450 µg/g to 800 µg/g, e.g. about 500 µg/g to about 700 µg/g;
Cu in an amount of from 25 µg/g to 45 µg/g, preferably 27 µg/g to 40 µg/g, e.g. about 28 µg/g to about 38 µg/g; and/or
Zn in an amount of from 20 µg/g to 45 µg/g, preferably 23 µg/g to 42 µg/g, e.g. about 25 µg/g to about 40 µg/g.

In one embodiment, said composition comprises
Na in an amount of from 833.6 µg/g to 1100.0 µg/g;
Mg in an amount of from 1040.4 µg/g to 1960.0 µg/g;
P in an amount of from 317.8 µg/g to 410 µg/g;
K in an amount of from 2380.0 µg/g to 3283.5 µg/g;
Ca in an amount of from 976.0 µg/g to 15000.0 µg/g;
Cr in an amount of from 7.2 µg/g to 13.0 µg/g;
Mn in an amount of from 73.4 µg/g to 93.5 µg/g;
Fe in an amount of from 506.0 µg/g to 691.5 µg/g;
Cu in an amount of from 28.8 µg/g to 37.5 µg/g; and/or
Zn in an amount of from 25.1 µg/g to 39.8 µg/g.

In one embodiment, said date palm leaf is of a species selected from *Phoenix dactylifera, Phoenix acaulis, Phoenix atlantica, Phoenix caespitosa, Phoenix canariensis, Phoenix loureiroi, Phoenix paludosa, Phoenix pusilla, Phoenix reclinata, Phoenix roebelenii, Phoenix rupicola, Phoenix sylvestris, Phoenix theophrasti;* preferably *Phoenix dactylifera;* more preferably *Phoenix dactylifera* L.

In one embodiment, said date palm leaf is of a variety selected from *Kholas, Ajwah, Al-Khunaizi, Amir Hajj, Bouffegous, Dabbas, Datça, Dayri, Empress, Fardh, Ftimi, Holwah, Haleema, Hayany, Iteema, Kenta, Khadrawi, Khastawi, Khenaizi, Lulu, Medjool, Mishriq, Mazafati, Nabtat-seyf, Piarom, Safawi, Sag'ai, Saidy, Sayer, Safrir, Sukkary, Sellaj, Indi, Tagyat, Tamej, Thoory, Umeljwary, Umelkhashab, Zahidi,* and *Zaghloul;* preferably *Kholas.*

In one embodiment, said composition comprises nitrogen, oxygen, and silicon in a ratio of 18-23 : 30-35 : 18-23, preferably in a ratio of 20-21 : 32.5-33.5 : 20-21, e.g. about 20.6 : 32.9 : 20.4, respectively.

In one embodiment, said composition comprises or consists of particles having a particle size ≤ 500 µm.

In one embodiment, the composition has a particle size distribution characterized by
5% to 15%, e.g. about 11%, of the particles having a particle size of < 20 µm,
40% to 60%, e.g. about 51%, of the particles having a particle size in the range of from 20 µm to 50 µm,
20% to 40%, e.g. about 33%, of the particles having a particle size in the range of from 50 µm to 100 µm,
1% to 5%, e.g. about 3%, of the particles having a particle size in the range of from 100 µm to 150 µm,
1% to 5%, e.g. about 2%, of the particles having a particle size in the range of from 150 µm to 200 µm, and/or
0.1% to 3%, e.g. about 1%, of the particles having a particle size in the range of from 200 µm to 500 µm.

In one embodiment, said composition is a reference material, preferably a certified reference material, more preferably a certified reference material of date palm leaf elemental composition.

In one embodiment, said leaf is a pinnate leaf or palmate leaf, preferably pinnate leaf.

In a further aspect, the present invention relates to a use of a composition, as defined above, as a reference material, e.g. certified reference material, preferably for analyzing food quality and/or environmental pollution.

In one embodiment, said use of a composition, as defined herein, as a reference material comprises one or more of the following applications:
- an accreditation process for a laboratory,
- instrument calibration,
- testing validity of tools, e.g. tools used in chemical analysis,
- validation of an analytical method,
- examination of a method, e.g. examination of an infrequently used method,
- troubleshooting, e.g. in chemical analysis,
- verification, e.g. verification of a correct use of an analytical method.

In a further aspect, the present invention relates to a method of preparing a homogenized, irradiated composition comprising a date palm leaf or component(s) thereof, preferably a composition as defined above, wherein said method comprises the steps:
a) providing a date palm leaf;
b) optionally, drying said date palm leaf, e.g. by freeze drying, heat drying, or vacuum drying, preferably heat drying in an oven at a temperature of from 40°C to 90°C, e.g. about 70°C;
c) homogenizing said date palm leaf to obtain a homogenized mixture; optionally by using a grinder;
d) irradiating said homogenized mixture of step c) to obtain an irradiated mixture, preferably by gamma ray irradiation, x-ray irradiation, and/or electron beam irradiation;
e) homogenizing said irradiated mixture of step d), preferably by using a grinder;
f) obtaining a homogenized, irradiated composition; preferably a homogenized, irradiated composition in the form of a powder;
g) optionally, storing said homogenized, irradiated composition in a light protected container.

In one embodiment, said irradiating in step d) comprises subjecting said homogenized mixture of step c) to irradiation, e.g. ionizing irradiation, preferably gamma ray irradiation, x-ray irradiation, and/or electron beam irradiation; wherein, preferably, an ionizing radiation dose absorbed by said homogenized mixture is in the range of from 1 kGy to 100 kGy, preferably 5 kGy to 50 kg, more preferably 10 kGy to 40 kGy, even more preferably 15 kGy to 35 kGy, e.g. about 25 kGy.

In one embodiment, said composition and said date palm leaf are as defined above.

In a further aspect, the present invention relates to a product obtained by a method of preparing a homogenized, irradiated composition comprising a date palm leaf or component(s) thereof, as defined above.

In a further aspect, the present invention relates to a kit comprising a composition, as defined above, and a manual, preferably certificate, specifying an amount of Na, Mg, P, K, Ca, Cr, Mn, Fe, Cu, and/or Zn comprised by said composition.

In one embodiment, said amount(s) of Na, Mg, P, K, Ca, Cr, Mn, Fe, Cu, and/or Zn comprised by said composition is/are as defined above.

In one embodiment, said manual, preferably certificate, further comprises instructions for a use of said composition as a reference material, preferably a use as defined above.

In a further aspect, the present invention relates to a composition comprising
Na in an amount of from 750 µg/g to 1200 µg/g, preferably 820 µg/g to 1115 µg/g, e.g. about 830 µg/g to about 1100 µg/g;
Mg in an amount of from 900 µg/g to 2200 µg/g, preferably 1020 µg/g to 2000 µg/g, e.g. about 1040 µg/g to about 1960 µg/g;
P in an amount of from 280 µg/g to 450 µg/g, preferably 300 µg/g to 430 µg/g, e.g. about 315 µg/g to about 410 µg/g;
K in an amount of from 400 µg/g to 6000 µg/g, preferably 515 µg/g to 5860 µg/g, e.g. about 2380 µg/g to about 3290 µg/g;
Ca in an amount of from 900 µg/g to 16000 µg/g, preferably 960 µg/g to 15150 µg/g, e.g. about 970 µg/g to about 15000 µg/g;
Cr in an amount of from 6 µg/g to 15 µg/g, preferably 7 µg/g to 13.4 µg/g, e.g. about 7.2 µg/g to about 13.0 µg/g;
Mn in an amount of from 70 µg/g to 98 µg/g, preferably 72 µg/g to 95 µg/g, e.g. about 73 µg/g to about 94 µg/g;
Fe in an amount of from 400 µg/g to 850 µg/g, preferably 450 µg/g to 800 µg/g, e.g. about 500 µg/g to about 700 µg/g;
Cu in an amount of from 25 µg/g to 45 µg/g, preferably 27 µg/g to 40 µg/g, e.g. about 28 µg/g to about 38 µg/g; and/or
Zn in an amount of from 20 µg/g to 45 µg/g, preferably 23 µg/g to 42 µg/g, e.g. about 25 µg/g to about 40 µg/g.

In one embodiment, said composition comprises
Na in an amount of from 833.6 µg/g to 1100.0 µg/g;
Mg in an amount of from 1040.4 µg/g to 1960.0 µg/g;
P in an amount of from 317.8 µg/g to 410 µg/g;
K in an amount of from 2380.0 µg/g to 3283.5 µg/g;
Ca in an amount of from 976.0 µg/g to 15000.0 µg/g;
Cr in an amount of from 7.2 µg/g to 13.0 µg/g;
Mn in an amount of from 73.4 µg/g to 93.5 µg/g;
Fe in an amount of from 506.0 µg/g to 691.5 µg/g;
Cu in an amount of from 28.8 µg/g to 37.5 µg/g; and/or
Zn in an amount of from 25.1 µg/g to 39.8 µg/g.

### DETAILED DESCRIPTION

This invention relates to a development of a certified reference material (CRM) of the matrix of date palm leaf. The invention further relates to an elemental analytical method of the relevant matrix as well as testing homogeneity methods. The invention also relates to the certification of some macro element (potassium), micro (sodium, magnesium, phosphorus, and calcium) and trace elements (chromium, manganese, iron, copper, and zinc). The inventors have developed the first date palm leaf certified reference material.

The composition of the invention comprises components of date palm, preferably of the leaves of date palm, e.g. of *Phoenix dactylifera L.* The advantage of the composition of the invention is that it can be used to analyze the quality of date products as well as all kinds of leaves having a similar chemical composition (e.g. richness in carbohydrates (such as glucose, fructose, and sucrose), vitamins, fibers, and minerals (elements)), e.g. whether such date products are contaminated with environmental contaminants. A further advantage of the composition of the invention is that the composition can be used to assess analytical methods for elemental analysis of date palm leaves. In particular, the composition can be applied for testing the accuracy of analytical results of date palm leaves and relevant leaves, for example for monitoring the quality of food and the environment. A further advantage of the composition of the invention is that it can be applied for laboratory accreditation, laboratory internal quality control, laboratory external quality assurance (proficiency testing), training practitioners, instrument calibration, troubleshooting, analytical method validation, checking infrequently used methods, and verification of the correct use of an analytical method, in addition to suitability check of equipment, reagents and standards.

The present invention provides a certified reference material for a macro element (potassium), micro elements (sodium, magnesium, phosphorus, and calcium) and trace elements (chromium, manganese, iron, copper, and zinc). Advantageously, the composition of the invention can be used for analyzing food safety and for environmental monitoring of date palms. For example, potassium, magnesium, manganese and iron are indicators for monitoring the health of date palms. The composition of the invention thus can be used for monitoring the health of date palms.

Certified reference materials which do not match the matrices of samples to be analyzed, are not suitable to be used for quality assurance of analysis for all food samples. However, analytical results have to be reliable because of the importance of such analytical results for commercial and health aspects of products such as food product. From an analytical point of view, food or plant samples typically comprise complex matrices with various chemical species. Thus, the reference material has to be selected to match the matrix of the respective sample in the best available way. The advantage of the composition of the invention is that its matrix and analyte levels match date palm leaves. Thus, the composition of the invention allows to analyze date palm leaf samples, such as date palm leaf environmental samples or date food samples. Advantageously, the composition of the invention allows for accurate results when analyzing date palm leaf samples. Thus, the composition of the invention allows for reliable results when monitoring the quality of food and the environment, such as when analyzing food safety and palm health. A further advantage of the composition of the invention is that the concentration of the elements are in a considerable amount that allow to detect the elements in all common measurement techniques. The method of the invention has the advantage that it allows to produce a highly standardized date palm leaf composition. Particularly, the method of the invention allows to produce a date palm leaf composition comprising defined amounts of Na, Mg, P, K, Ca, Cr, Mn, Fe, Cu, and Zn.

The term "composition comprising a date palm leaf or component(s) thereof", as used herein, relates to a composition comprising at least components of a date palm leaf, such as major, minor, and/or trace elements of a date palm leaf. In one embodiment, the components are derived from a date palm leaf, i.e. the composition is prepared using date palm leaves. In one embodiment, the date palm leaf components present in a composition of the invention derive from date palm leaves used to prepare the composition. In one embodiment, the composition of the invention is prepared using a method of the invention. In one embodiment, the composition of the invention comprises or consists of date palm leaves or components derived from date palm leaves. In one embodiment, the terms "composition comprising a date palm leaf or component(s) thereof" and "date palm leaf composition" are used interchangeably. In one embodiment, when referring to a "CRM", a composition of the invention is meant. In one embodiment, the term "derived from date palm leaves" in the context of components present in a composition means that the components are of natural origin, namely being obtained from date palm leaves, e.g. using a method of the invention, or of synthetic origin, preferably of natural origin. In one embodiment, the position of the invention complies with ISO 34 guidelines. The terms "date palm leaf" and "date palm leaves", as used herein, are meant to be understood as each relating to both the singular form "date palm leaf" and the plural form "date palm leaves".

In one embodiment, said components comprise Na, Mg, P, K, Ca, Cr, Mn, Fe, Cu, and Zn; for example,
Na in an amount of from 750 µg/g to 1200 µg/g, preferably 820 µg/g to 1115 µg/g, e.g. about 830 µg/g to about 1100 µg/g; such as about 833.6 µg/g to about 1100.0 µg/g;
Mg in an amount of from 900 µg/g to 2200 µg/g, preferably 1020 µg/g to 2000 µg/g, e.g. about 1040 µg/g to about 1960 µg/g; such as about 1040.4 µg/g to about 1960.0 µg/g;
P in an amount of from 280 µg/g to 450 µg/g, preferably 300 µg/g to 430 µg/g, e.g. about 315 µg/g to about 410 µg/g; such as about 317.8 µg/g to about 410 µg/g;
K in an amount of from 400 µg/g to 6000 µg/g, preferably 515 µg/g to 5860 µg/g, e.g. about 2380 µg/g to about 3290 µg/g; such as about 2380.0 µg/g to about 3283.5 µg/g;
Ca in an amount of from 900 µg/g to 16000 µg/g, preferably 960 µg/g to 15150 µg/g, e.g. about 970 µg/g to about 15000 µg/g; such as about 976.0 µg/g to about 15000.0 µg/g;
Cr in an amount of from 6 µg/g to 15 µg/g, preferably 7 µg/g to 13.4 µg/g, e.g. about 7.2 µg/g to about 13.0 µg/g; such as about 7.2 µg/g to about 13.0 µg/g;
Mn in an amount of from 70 µg/g to 98 µg/g, preferably 72 µg/g to 95 µg/g, e.g. about 73 µg/g to about 94 µg/g; such as about 73.4 µg/g to about 93.5 µg/g;
Fe in an amount of from 400 µg/g to 850 µg/g, preferably 450 µg/g to 800 µg/g, e.g. about 500 µg/g to about 700 µg/g; such as about 506.0 µg/g to about 691.5 µg/g;
Cu in an amount of from 25 µg/g to 45 µg/g, preferably 27 µg/g to 40 µg/g, e.g. about 28 µg/g to about 38 µg/g; such as about 28.8 µg/g to about 37.5 µg/g; and
Zn in an amount of from 20 µg/g to 45 µg/g, preferably 23 µg/g to 42 µg/g, e.g. about 25 µg/g to about 40 µg/g; such as about 25.1 µg/g to about 39.8 µg/g.

In one embodiment, said date palm leaf is a leaf of a date palm species selected from *Phoenix dactylifera, Phoenix acaulis, Phoenix atlantica, Phoenix caespitosa, Phoenix canariensis, Phoenix loureiroi, Phoenix paludosa, Phoenix pusilla, Phoenix reclinata, Phoenix roebelenii, Phoenix rupicola, Phoenix sylvestris, Phoenix theophrasti;* preferably *Phoenix dactylifera;* more preferably *Phoenix dactylifera* L. In one embodiment, said date palm leaf is a leaf of a date palm variety selected from *Kholas, Ajwah, Al-Khunaizi, Amir Hajj, Bouffegous, Dabbas, Datça, Dayri, Empress, Fardh, Ftimi, Holwah, Haleema, Hayany, Iteema, Kenta, Khadrawi, Khastawi, Khenaizi, Lulu, Medjool, Mishriq, Mazafati, Nabtat-seyf, Piarom, Safawi, Sag'ai, Saidy, Sayer, Safrir, Sukkary, Sellaj, Indi, Tagyat, Tamej, Thoory, Umeljwary, Umelkhashab, Zahidi,* and *Zaghloul;* preferably *Kholas.* The current CRM is appropriate for the analysis of all stages of date leaf, and all kinds of leaves having similar chemical composition (e.g. richness in carbohydrates (such as glucose, fructose, and sucrose), vitamins, fibers, and minerals (elements)). In one embodiment, a composition, particularly CRM, produced using a date palm leaf of any variety/cultivar is used for analyzing a date palm leaf of any other variety/cultivar, and/or is used for analyzing a material e.g. leaf having a similar composition, such as a similar composition with respect to a richness in carbohydrates (e.g. glucose, fructose, sucrose), vitamins, fibers, and/or minerals (e.g. elements).

In one embodiment, the term "homogenized, irradiated composition", as used herein, relates to a composition that has been subjected to homogenization and irradiation. In one embodiment, said composition is a homogeneous composition. In one embodiment, said composition comprises or consists of particles having a particle size ≤ 500 µm. In one embodiment, the homogenized, irradiated composition of the invention is a homogeneous composition.

In one embodiment, the term "homogenized", as used herein in the context of a composition or mixture, relates to the composition or mixture having been subjected to homogenization, e.g. using a grinder, food processor, mixer, laboratory homogenizer, mill e.g. cryogenic mill, blender, or any combination thereof. Typically, homogenization performs multiple functions such as reduction of particle size and mixing. In one embodiment, a homogenized composition is a homogeneous composition. In one embodiment, a homogenized composition is a composition comprising or consisting of particles having a particle size ≤ 500 µm. In one embodiment, said homogenizing said date palm leaf to obtain a homogenized mixture in steps c) of a method of the invention comprises homogenizing the date palm leaf using a grinder, food processor, mixer, laboratory homogenizer, mill e.g. cryogenic mill, blender, or any combination thereof, preferably using a grinder. In one embodiment, said homogenizing said irradiated mixture of step d) in step e) of a method of the invention comprises homogenizing the irradiated mixture using a grinder, food processor, mixer, laboratory homogenizer, mill e.g. cryogenic mill, blender, or any combination thereof, preferably using a grinder. In one embodiment, the internal perimeter and/or the blades of the grinder, food processor, mixer, laboratory homogenizer, mill e.g. cryogenic mill, and/or blender are coated with cover, such as a polyethylene cover. In one embodiment, the method of the invention comprises a step of sieving said homogenized mixture obtained in step c), a step of sieving said irradiated mixture obtained in step d), and/or a step of sieving said homogenized, irradiated composition obtained in step f), preferably to remove particles having a particle size ≤ 500 µm. In one embodiment, a homogeneous composition is a composition in which the components, such as Na, Mg, P, K, Ca, Cr, Mn, Fe, Cu, and Zn, are evenly distributed, preferably comprising or consisting of particles having a particle size ≤ 500 µm. In one embodiment, particle size is measured using scanning electron microscopy (SEM), transmission electron microscopy (TEM), X-ray diffraction spectroscopy, laser diffraction particle size analysis, static image analysis, dynamic image analysis, sieve analysis, and/or dynamic light scattering.

In one embodiment, the composition comprises or consists of particles having a particle size distribution characterized by
5% to 15%, e.g. about 11%, of the particles having a particle size of < 20 µm,
40% to 60%, e.g. about 51%, of the particles having a particle size in the range of from 20 µm to 50 µm,
20% to 40%, e.g. about 33%, of the particles having a particle size in the range of from 50 µm to 100 µm,
1% to 5%, e.g. about 3%, of the particles having a particle size in the range of from 100 µm to 150 µm,
1% to 5%, e.g. about 2%, of the particles having a particle size in the range of from 150 µm to 200 µm, and/or
0.1% to 3%, e.g. about 1%, of the particles having a particle size in the range of from 200 µm to 500 µm.

The term "irradiated", as used herein in the context of a composition or mixture, relates to the composition or mixture having been subjected to irradiation, preferably with ionizing irradiation, more preferably gamma ray irradiation, x-ray irradiation, and/or electron beam irradiation. In one embodiment, an irradiated composition and/or irradiated mixture has been subjected to an ionizing radiation dose in the range of from 1 kGy to 100 kGy, preferably 5 kGy to 50 kg, more preferably 10 kGy to 40 kGy, even more preferably 15 kGy to 35 kGy, e.g. about 25 kGy. In one embodiment, said irradiating said homogenized mixture to obtain an irradiated mixture in step d) of a method of the invention comprises subjecting said homogenized mixture to gamma ray irradiation, x-ray irradiation, and/or electron beam irradiation, preferably to an ionizing radiation dose in the range of from 1 kGy to 100 kGy, preferably 5 kGy to 50 kg, more preferably 10 kGy to 40 kGy, even more preferably 15 kGy to 35 kGy, e.g. about 25 kGy. In one embodiment, said irradiated does not relate to an irradiation with sunlight. In one embodiment, irradiation is performed using a gamma ray source, such as a Co⁶⁰ facility, e.g. Nordion Gamma Cell 220 from Nordion, Canada Ltd. In one embodiment, irradiation is performed at room temperature. In one embodiment, irradiation comprises applying a dose rate in the range of from 1 kGy/hr to 10 kGy/hr, preferably 3 kGy/hr to 5 kGy/hr, e.g. about 4.1 kGy/hr.

The term "ionizing irradiation", as used herein, relates to an irradiation with ionizing radiation, preferably comprising subatomic particles or electromagnetic waves that have sufficient energy to ionize atoms or molecules by detaching electrons from them such as gamma rays, X-rays, and the higher energy ultraviolet part of the electromagnetic spectrum. In one embodiment, ionizing radiation has an energy between 10 electronvolts (eV) and 33 eV. In one embodiment, ionizing irradiation is selected from gamma ray irradiation, x-ray irradiation, electron beam irradiation, and combinations thereof, preferably gamma ray irradiation. In one embodiment, ionizing radiation is selected from gamma ray radiation, x-ray radiation, electron beam radiation, and combinations thereof, preferably gamma ray irradiation. In one embodiment, said ionizing irradiation does not comprise an irradiation with sunlight.

In one embodiment, the term "µg/g", as used herein, relates to a mass fraction of a substance, such as a date palm leaf component e.g. a minor or trace element, in µg of the substance, to a mass of the total composition, e.g. the composition comprising a date palm leaf or component thereof of the invention, in gram; such as mass fractions of Na, Mg, P, K, Ca, Cr, Mn, Fe, Cu, and/or Zn. In one embodiment, the mass fraction relates to µg of a component of the composition, e.g. an element, to g of the composition, preferably on a dry mass basis. In one embodiment, mass fractions, such as of Na, Mg, P, K, Ca, Cr, Mn, Fe, Cu, and/or Zn, are determined using any technique known to a person skilled in the art, e.g. ICP, ICP-MS, AAS, INAA, XRF, AES, AFE, PIXE, PIXE-RBS, and IC, preferably ICP such as ICP-MS.

In one embodiment, the composition of the invention comprises
Na in an amount of from 750 µg/g to 1200 µg/g, preferably 820 µg/g to 1115 µg/g, e.g. about 830 µg/g to about 1100 µg/g; such as about 833.6 µg/g to about 1100.0 µg/g;
Mg in an amount of from 900 µg/g to 2200 µg/g, preferably 1020 µg/g to 2000 µg/g, e.g. about 1040 µg/g to about 1960 µg/g; such as about 1040.4 µg/g to about 1960.0 µg/g;
P in an amount of from 280 µg/g to 450 µg/g, preferably 300 µg/g to 430 µg/g, e.g. about 315 µg/g to about 410 µg/g; such as about 317.8 µg/g to about 410 µg/g;
K in an amount of from 400 µg/g to 6000 µg/g, preferably 515 µg/g to 5860 µg/g, e.g. about 2380 µg/g to about 3290 µg/g; such as about 2380.0 µg/g to about 3283.5 µg/g;
Ca in an amount of from 900 µg/g to 16000 µg/g, preferably 960 µg/g to 15150 µg/g, e.g. about 970 µg/g to about 15000 µg/g; such as about 976.0 µg/g to about 15000.0 µg/g;
Cr in an amount of from 6 µg/g to 15 µg/g, preferably 7 µg/g to 13.4 µg/g, e.g. about 7.2 µg/g to about 13.0 µg/g; such as about 7.2 µg/g to about 13.0 µg/g;
Mn in an amount of from 70 µg/g to 98 µg/g, preferably 72 µg/g to 95 µg/g, e.g. about 73 µg/g to about 94 µg/g; such as about 73.4 µg/g to about 93.5 µg/g;
Fe in an amount of from 400 µg/g to 850 µg/g, preferably 450 µg/g to 800 µg/g, e.g. about 500 µg/g to about 700 µg/g; such as about 506.0 µg/g to about 691.5 µg/g;
Cu in an amount of from 25 µg/g to 45 µg/g, preferably 27 µg/g to 40 µg/g, e.g. about 28 µg/g to about 38 µg/g; such as about 28.8 µg/g to about 37.5 µg/g; and
Zn in an amount of from 20 µg/g to 45 µg/g, preferably 23 µg/g to 42 µg/g, e.g. about 25 µg/g to about 40 µg/g; such as about 25.1 µg/g to about 39.8 µg/g.

In a preferred embodiment, the composition of the invention comprises or consists of
Na in an amount of from 833.6 µg/g to 1100.0 µg/g;
Mg in an amount of from 1040.4 µg/g to 1960.0 µg/g;
P in an amount of from 317.8 µg/g to 410 µg/g;
K in an amount of from 2380.0 µg/g to 3283.5 µg/g;
Ca in an amount of from 976.0 µg/g to 15000.0 µg/g;
Cr in an amount of from 7.2 µg/g to 13.0 µg/g;
Mn in an amount of from 73.4 µg/g to 93.5 µg/g;
Fe in an amount of from 506.0 µg/g to 691.5 µg/g;
Cu in an amount of from 28.8 µg/g to 37.5 µg/g; and
Zn in an amount of from 25.1 µg/g to 39.8 µg/g.

The term "reference material", as used herein, relates to a standard material having a defined property, e.g. a defined composition such as a defined concentration of Na, Mg, P, K, Ca, Cr, Mn, Fe, Cu, and/or Zn. In one embodiment, a reference material is a material for use as a calibrator in an assay. In one embodiment, a reference material is a material homogeneous and stable with respect to one or more specified properties. A reference material can be used for various applications, e.g. to check the quality and metrological traceability of products, to validate analytical measurement methods, for the calibration of instruments, and for analyzing food quality and/or environmental pollution. In one embodiment, the terms "reference material" and "standard reference material" are used interchangeably. In one embodiment, a reference material reflects the elemental composition of a date palm leaf. In one embodiment, the composition of the invention is for use as a reference material, e.g. as certified reference material, for date palm leaf analysis, such as quality control e.g. date palm leaf quality control, date palm health analysis, and/or analysis of environmental pollution. In one embodiment, the composition of the invention is a reference material such as a matrix reference material characterized for the composition of specified major, minor and/or trace chemical constituents. In one embodiment, the composition of the invention is a date palm leaf composition chemically characterized for one or more components such as elements with a known uncertainty.

The term "certified reference material", as used herein, relates to a reference material characterized by one or more specified properties, e.g. a defined composition such as a defined concentration of Na, Mg, P, K, Ca, Cr, Mn, Fe, Cu, and/or Zn; preferably accompanied by a certificate that provides the value of the specified property, its associated uncertainty, and optionally a statement of metrological traceability. In one embodiment, the composition of the invention is a reference material, preferably a certified reference material, for date palm leaf elemental composition, e.g. having defined concentrations of Na, Mg, P, K, Ca, Cr, Mn, Fe, Cu, and/or Zn. In one embodiment, the reference material, preferably certified reference material, is used for analyzing food quality and/or environmental pollution. In one embodiment, the composition of the invention is used as reference material, preferably certified reference material, e.g. for analyzing food quality and/or environmental pollution. In one embodiment, the certified values of the certified reference material are
Na in an amount of from 833.6 µg/g to 1100.0 µg/g;
Mg in an amount of from 1040.4 µg/g to 1960.0 µg/g;
P in an amount of from 317.8 µg/g to 410 µg/g;
K in an amount of from 2380.0 µg/g to 3283.5 µg/g;
Ca in an amount of from 976.0 µg/g to 15000.0 µg/g;
Cr in an amount of from 7.2 µg/g to 13.0 µg/g;
Mn in an amount of from 73.4 µg/g to 93.5 µg/g;
Fe in an amount of from 506.0 µg/g to 691.5 µg/g;
Cu in an amount of from 28.8 µg/g to 37.5 µg/g; and/or
Zn in an amount of from 25.1 µg/g to 39.8 µg/g.

In one embodiment, the composition of the invention is provided in the form of a kit and/or is accompanied by a certificate that specifies the certified values as defined above. In one embodiment, said kit comprises a certificate specifying the certified values as defined above. In one embodiment, said use of a composition, as defined herein, as a reference material comprises one or more of the following applications:
- an accreditation process for a laboratory,
- instrument calibration,
- testing validity of tools, e.g. tools used in chemical analysis,
- validation of an analytical method,
- examination of a method, e.g. examination of an infrequently used method,
- troubleshooting, e.g. in chemical analysis,
- verification, e.g. verification of a correct use of an analytical method. For example, the certified reference material of the invention can be used by industry (for example used in quality control laboratories), researchers and academicians (for example applied at research centers, universities, etc.), practitioners (for example used in municipality laboratories, environmental monitoring labs, etc.), students (for example in higher education institutions), and/or trainees (for example various public and private centers). In one embodiment, the use of the composition of the invention as a reference material involves an elemental analytical method of the relevant matrix and/or testing homogeneity method(s). In one embodiment, the use of the invention, particularly analyzing food quality and/or environmental pollution using a composition of the invention as a reference material, comprises using the composition for any of
- an accreditation process for a laboratory,
- instrument calibration,
- testing validity of tools, e.g. tools used in chemical analysis,
- validation of an analytical method,
- examination of a method, e.g. examination of an infrequently used method,
- troubleshooting, e.g. in chemical analysis,
- verification, e.g. verification of a correct use of an analytical method.

The terms "nitrogen, oxygen, and silicon in a ratio" and "nitrogen : oxygen : silicon ratio" , as used herein, relate to a ratio of the elements nitrogen, oxygen, and silicon in a composition of the invention. For example, such ratio describes the relative amounts of nitrogen, oxygen, and silicon in the composition. In one embodiment, the ratio of nitrogen, oxygen, and silicon is 18-23 : 30-35 : 18-23, i.e. relative to each other there are 18-23 parts of nitrogen, 30-35 parts of oxygen, and 18-23 parts of silicon. In one embodiment, the ratio of nitrogen, oxygen, and silicon is 20-21 : 32.5-33.5 : 20-21, i.e. relative to each other there are 20-21 parts of nitrogen, 32.5-33.5 parts of oxygen, and 20-21 parts of silicon. In one embodiment, the ratio of nitrogen, oxygen, and silicon is 20.6 : 32.9 : 20.4, i.e. relative to each other there are 20.6 parts of nitrogen, 32.9 parts of oxygen, and 20.4 parts of silicon. In one embodiment, the amounts of nitrogen, oxygen, and silicon are determined using energy-dispersive X-ray spectroscopy (EDX). In one embodiment, the composition of the invention has a nitrogen : oxygen : silicon ratio as defined above.

The term "drying said date palm leaf", as used herein, relates to drying a date palm leaf using any method known to person of skill in the art, such as freeze drying, heat drying, or vacuum drying. In one embodiment, drying a date palm leaf comprises heat drying said date palm leaf in an oven at a temperature of from 40°C to 90°C, e.g. about 70°C, such as for 1 min to 72 hours, e.g. 20 hours. In one embodiment, drying a date palm leaf comprises drying until a water content of 0-25 wt%, e.g. 10-25 wt% is achieved. In one embodiment, step b) of a method of the invention, if present, comprises drying a date palm leaf to obtain a dried date palm leaf, wherein said dried date palm leaf preferably has a water content < 25%. In one embodiment, the use of a composition according to the invention comprises drying said composition prior to further use, e.g. prior to using the composition as reference material for analyzing food quality and/or environmental pollution. In one embodiment, the kit of the invention comprises instructions to dry the composition, preferably reference material, prior to using the composition.

In one embodiment, homogeneity of a composition, e.g. of a homogenized composition, is determined using any of SEM, EDX, XRD, FTIR, PIXE, RBS, INAA, ICP, XRF, and combinations thereof. In one embodiment, a composition is analyzed using ICP-OES.

The terms "of the [present] invention", "in accordance with the invention", "according to the invention" and the like, as used herein are intended to refer to all aspects and embodiments of the invention described and/or claimed herein.

As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by ±20%, ±15%, ±10%, and for example ±5%. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated.

### List of abbreviations

AAS: Atomic absorption spectrometry
EDX: Energy dispersive X-ray spectroscopy
ICP-OES: Inductively coupled plasma-optical emission spectrometry
ICP-SFMS: Inductively coupled plasma-sector field mass spectrometry
INAA: Instrumental neutron activation analysis (INAA)
PIXE: particle-induced X-ray emission
RBS: Rutherford backscattering spectrometry
SEM: Scanning electron microscopy (SEM)
XRD: X-ray diffraction
XRF: X□ray fluorescence spectrometry

### BRIEF DESCRIPTION OF THE FIGURES

The present invention is now further described by reference to the following figures.

All methods mentioned in the figure descriptions below were carried out as described in detail in the examples.

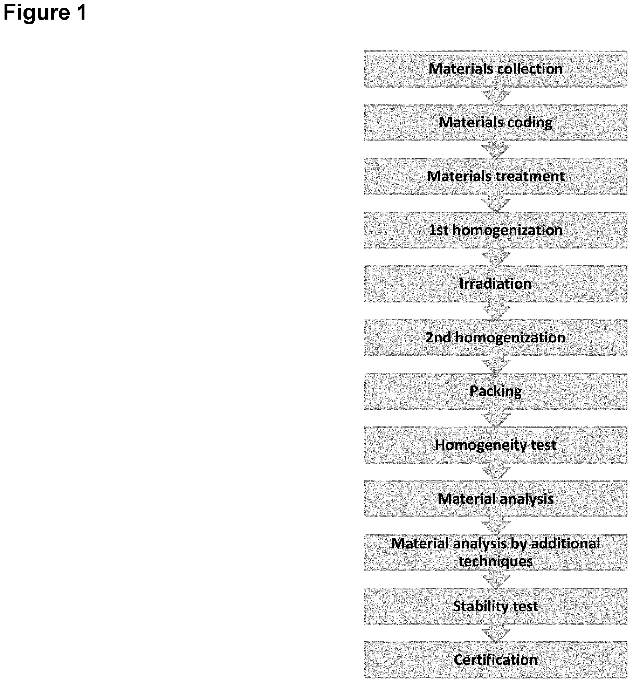

**Figure 1** shows the process of certified reference material development. A standardized date palm leaf elemental composition was successfully developed.

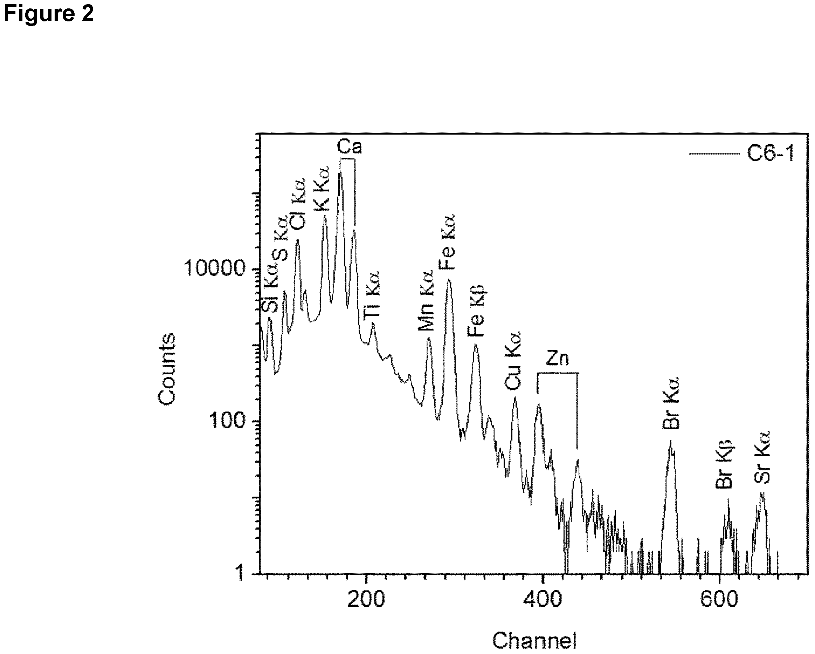

**Figure 2** shows a representative PIXE spectrum of date palm leaves (*Phoenix dactylifera* L). Particularly, a representative spectrum of the CRM of date palm leaf is shown for an elemental analysis obtained by a combination of particle-induced X-ray emission with Rutherford backscattering spectrometry techniques (PIXE-RBS). The combination was exploited for testing the homogeneity of the CRM benefiting the advantages of the techniques in terms of non-destruction, simultaneous quantification of a wide range of elements, sensitive detection of various elements ranging from sodium to uranium. The results confirm that the homogeneity of the date palm leaf CRM is acceptable (relative average deviation < 10%).

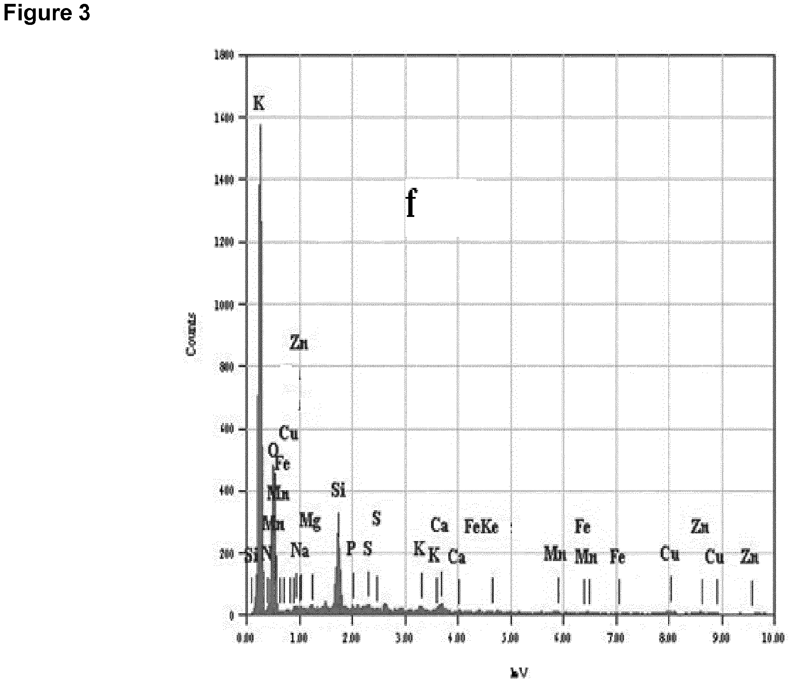

**Figure 3** shows an EDX spectra of a date palm leaf. Particularly, a representative spectrum of the CRM of date palm leaf is shown for the analysis of major elements obtained by energy dispersive X-ray spectroscopy (EDX). This technique was exploited for testing the homogeneity of the CRM benefiting the advantages of the techniques in terms of non-destruction and simultaneous quantification of a wide range of elements. The results confirm that the homogeneity of the date palm leaf CRM is acceptable.

In the following, reference is made to the examples, which are given to illustrate, not to limit the present invention.

### EXAMPLES

### Example 1: Material collection and preparation

A bulk of leaves material was collected from Al-Ahssa Province, Eastern Region, Saudi Arabia. The sampled date palm trees produced dates fruit with the variety of "Kholas". To maintain the homogeneity of the leaves, the material was collected from one farm. The leaves were collected in the stage of dates fruit of "Tamor", i.e., after conversion from "Rotab". Leaves were washed by distilled water to remove dust. The leaves were cut into small pieces and kept in polyethylene bags and transferred to laboratory at the Department of Chemistry, College of Science, King Khalid University, Abha, Saudi Arabia. The material was dried in oven at 70°C for 2-3 days or about 20 hours using a freeze dryer, and kept in a freezer at -30°C for further process. The leaves were then ground and sieved to particle-size less than 500 µm. Thereafter, the powder was homogenized for 12 h and irradiated with a dose rate of 4.1 kGy/hr and at 25 kGy of absorbed dose (1 Gy = 100 rad = 1 Joule/kg). The material was homogenized after irradiation for further 12 h.

### Example 2: Irradiation

The process of irradiation was completed for the materials to be certified. The quantities of reference materials to be certified were in the average of 5 kg. The container of gamma ray irradiation had a volume of 1 L. Hence, the total quantity of each material was divided into 5-8 parts, based on the density of material. The material of date palm leaf was irradiated in eight steps. All irradiations of samples were carried out using Co⁶⁰ facility, Nordion Gamma Cell 220 from Nordion, Canada Ltd. The dose rate for each sample was 4.1 kGy/hr and at 25 kGy of absorbed dose (1 Gy = 100 rad = 1 Joule.kg⁻¹). The irradiation treatment was performed in vessels of Pyrex-glass at free room temperature. Advantageously, by irradiating the reference materials, the reference materials have a long shelf-life.

### Example 3: Second homogenization

After irradiation phase, CRMs were discharged from their packing in a large light protected polypropylene container and stored at room temperature. Each CRM was then subjected to homogeneity process. Homogenization was repeated to maintain the highest degree of homogeneity before final packing in bottles. After the second homogenization step, CRMs were packed in their final forms. Light protected brown bottles were used for packing. 25 g were packed in 250 mL bottles.

### Example 4: Material analysis

Homogeneity tests were performed using 1) PIXE and RBS techniques, 2) SEM, EDX and XRD, and 3) WDXRF. The analyses showed that the composition of the invention is homogenous.

### Digestion procedures of CRMs

Microwave digestion system was used to accelerate the digestion analysis.

For CRM of date palm leaves, two procedures were applied for digestion of leaves. The first procedure was applied to the weight of 3.0 g. The sample was ashed at muffle furnace at 550°C and for 24 h. The ashed material was allowed to cool at room temperature and then moistened with few drops of deionized distilled water. 3 mL of concentrated hydrochloric acid were added to the sample with stirring at about 6o°C until semi dryness. The process took about 30 min. The residue was then dissolved in 5 mL of **2** mol/L nitric acid. Thereafter, the sample was filtered through Whatman^{®} filter number 42. A blank sample was prepared in parallel using the same procedure.

The second procedure included the weight of 1.0 g. 2 mL of concentrated nitric acid and 5 mL of concentrated hydrochloric acid were added to the sample. The mixture was placed into Teflon^{®} cups and placed in microwave digestion unit.

### Analysis using ICP-OES instrument

A new ICP-OES instrument was validated and calibrated. Various conditions, such as axial and radial modes and wavelength, were tested for each element. In addition, a long series of standard solutions were examined.

**Table 1: Elements concentrations in leaves of date palm obtained from a newly developed home method using ICP-OES (M1: Measurement 1, M2: Measurement 2, M3: Measurement 3)**

| **Element** | **M1** | **M2** | **M3** | **Mean** |
|---|---|---|---|---|
| Cr | 8.362 | 8.728 | 7.984 | 8.358 |
| Mn | 72.891 | 75.810 | 71.482 | 73.394 |
| Fe | 532.701 | 585.287 | 516.966 | 544.985 |
| Co | 0.250 | 0.249 | 0.250 | 0.250 |
| Cu | 33.200 | 34.040 | 31.687 | 32.976 |
| Zn | 37.444 | 35.786 | 47.405 | 40.212 |
| A1 | 511.483 | 646.758 | 491.267 | 549.836 |
| Pb | 0.749 | 0.499 | 0.624 | 0.624 |
| Na | 874.066 | 818.295 | 808.574 | 833.645 |
| Mg | 1429.606 | 1472.943 | 1371.632 | 1424.727 |
| Cd | 0.250 | 0.249 | 0.250 | 0.250 |
| Ni | 6.234 | 5.988 | 6.104 | 6.109 |
| Ca | 8378.183 | 8657.731 | 8147.954 | 8394.622 |

### Example 5: Material analysis by additional techniques

A wide range of analytical techniques including ICP-OES, ICP-MS, FAAS, ETAAS, INAA, XRF, XRD, RBS and PIXE were performed.

### Homogeneity test using PIXE and RBS

PIXE and RBS were performed to analyze the homogeneity of a composition of the invention. It was found that the composition is a homogeneous composition.

**Table 2: Descriptive statistics of between-homogeneity test of the elements contents in a CRM of leaves of date palm measured by PIXE and RBS.**

| **Element** | **AC** | **RER%** | **RSD%** | **RAV%** |
|---|---|---|---|---|
| Si | 41551.0 | 6.8-₇.2 | 5.0 | 4.2 |
| S | 2021.6 | 3.5-3.9 | 5.8 | 4.6 |
| Cl | 3899.1 | 1.8-2.0 | 11.3 | 8.8 |
| K | 3191.4 | 1.2-1.3 | 6.5 | 4.1 |
| Ca | 10040.0 | 1.0-1.1 | 4.2 | 3.6 |
| Ti | 60.9 | 3.8-5.9 | 14.6 | 10.1 |
| Cr | 10.4 | 14.3-25.0 | 19.9 | 15.7 |
| Mn | 102.4 | 2.7-3.2 | 6.6 | 5.7 |
| Fe | 847.4 | 0.9-1.2 | 22.9 | 15.2 |
| Cu | 51.6 | 3.8-5.9 | 12.6 | 7.9 |
| Zn | 51.7 | 5.1-7.0 | 9.5 | 6.2 |
| Br | 76.4 | 9.1-10.3 | 9.3 | 7.4 |
| Sr | 61.7 | 18.7-25.9 | 12.0 | 9.2 |

### Homogeneity test using SEM, EDX and XRD

SEM, EDX and XRD were performed to analyze the particle size and homogeneity of a composition of the invention. SEM, EDX (Table 4 and Figure 3) and XRD showed that the composition is a homogeneous composition.

**Table 3: Descriptive statistics of distribution of percentages of particle-size (µm) fractions in the certified reference materials**

| **CRM** | **Particle-size fraction in µm** | | | | | |
|---|---|---|---|---|---|---|
| | | | | | | |

| **leaves of date palm** | < **20** | **20-50** | **50-100** | **100-150** | **150-200** | **200-500** |
|---|---|---|---|---|---|---|
| Mean | 10.93 | 51.04 | 32.50 | 2.74 | 2.04 | 0.94 |
| SD | 0.61 | 1.48 | 1.30 | 0.28 | 0.24 | 0.26 |
| RSD | 5.56 | 2.91 | 3.99 | 10.06 | 11.94 | 27.97 |
| MD | 0.45 | 1.21 | 1.06 | 0.19 | 0.21 | 0.22 |

**Table 4: Descriptive statistics of element composition (%) of certified reference materials obtained by EDX measurements**

| **leaves of date palm** | **N** | O | **Si** | **Ca** | **Cu** | **Zn** |
|---|---|---|---|---|---|---|
| Mean | 20.63 | 32.91 | 20.43 | 4.76 | 20.63 | 13.97 |
| SD | 5.52 | 5.84 | 2.65 | 0.70 | 3.38 | 4.19 |
| RSD (%) | 26.73 | 17.73 | 12.97 | 14.77 | 16.38 | 29.96 |
| MD | 4.44 | 4.31 | 1.98 | 0.49 | 2.39 | 2.96 |

### Homogeneity test using WDXRF

The CRM was analyzed using WDXRF. The results are shown in table 5.

**Table 5: Descriptive statistics of elements contents (weight %) in leaves of date palm CRM**

| **Element** | **Average** | **RSD%^{a}** | **RAD%^{b}** | **Skewness** | **Kurtosis** |
|---|---|---|---|---|---|
| Al | 0.146 | 1.34 | 1.09 | -0.29 | -1.45 |
| Br | 0.021 | 0.25 | 0.23 | -0.37 | -2.80 |
| Ca | 3.350 | 0.24 | 0.17 | 0.00 | -1.20 |
| Cl | 1.147 | 0.43 | 0.36 | -1.23 | -0.84 |
| Cu | 0.018 | 4.67 | 3.94 | -0.14 | -1.78 |
| Fe | 0.291 | 0.86 | 0.67 | 0.90 | -0.17 |
| K | 0.976 | 0.43 | 0.38 | -0.40 | -2.31 |
| Mg | 0.240 | 0.49 | 0.37 | 0.67 | -0.45 |
| Mn | 0.033 | 14.57 | 13.32 | -0.36 | -2.77 |
| Na | 0.102 | 0.48 | 0.40 | -1.23 | -0.84 |
| Ni | 0.017 | 16.76 | 13.61 | -1.11 | -0.59 |
| P | 0.095 | 1.51 | 1.28 | -0.13 | -1.97 |
| S | 0.542 | 0.61 | 0.51 | -0.14 | -1.91 |
| Si | 6.404 | 0.12 | 0.10 | -1.11 | 0.27 |
| Sr | 0.016 | 4.04 | 3.51 | -0.55 | -1.85 |
| Ti | 0.027 | 2.98 | 2.24 | 0.17 | -0.99 |
| Zn | 0.014 | 8.28 | 7.05 | -0.30 | -1.64 |

| | | | | | |
|---|---|---|---|---|---|
| a relative standard deviation; b relative average deviation | | | | | |

### CRMs analysis by ICP-MS

The CRM was analyzed using ICP-MS. The results are shown in table 6.

**Table 6: Elements concentrations and limits of detection (LODs) (µg/g) in date palm leaf composition obtained by ICP-MS**

| **Element** | **R1** | **R2** | **LOD** |
|---|---|---|---|
| Ca | 9800 | 9700 | 4 |
| Cd | ND | ND | 0.01 |
| Cr | 8.2 | 9.6 | 0.06 |
| Cu | 30 | 30 | 0.1 |
| Fe | 550 | 560 | 0.5 |
| Pb | 0.64 | 0.63 | 0.03 |
| Mg | 1700 | 1700 | 0.6 |
| Mn | 81 | 80 | 0.02 |
| P | 430 | 390 | 2 |
| K | 3200 | 3100 | 20 |
| Na | 990 | 940 | 10 |
| Zn | 33 | 33 | 0.1 |

### CRMs analysis by INAA

The CRM was analyzed using INAA. The results are shown in table 7.

**Table 7: Elements concentrations (µg/g), RSD (%) and LOD of duplicate independent analysis of date palm leaf composition obtained by INAA**

| **Element** | **C1** | **RSD (%)** | **C2** | **RSD (%)** | **LOD** |
|---|---|---|---|---|---|
| Cd | < 5 | - | < 5 | - | 5 |
| Ca | 10400 | 4.6 | 10200 | 4.6 | **100** |
| Cr | 13.7 | 16 | 12.2 | 17 | 2 |
| Cu | < 40 | - | < 40 | - | 30 |
| Fe | 1210 | 23 | 1440 | 18 | 200 |
| Mg | 1675 | 11 | 1531 | 11 | **100** |
| Mn | 88 | 3.4 | 85 | 3.5 | 1 |
| K | 2500 | 20 | 3600 | 14 | **50** |
| Na | 1030 | 3.7 | 1040 | 3.7 | 5 |
| Zn | <50 | - | <50 | - | 10 |

### CRMs analysis by PIXE

The CRM was analyzed using PIXE. The results are shown in table 8.

**Table 8: Elements concentrations (µg/g), RSD (%) and LOD of duplicate independent analysis of date palm leaf composition obtained by PIXE**

| **Element** | **Energy (keV)** | **Measurement 1** | | | **Measurement 1** | | |
|---|---|---|---|---|---|---|---|
| | | **LOD** | **C2** | **Error** | **LOD** | **C2** | **Error** |
| Na | 1.041 | 298.60 | 970 | 180 | 325.40 | 810 | 190 |
| Mg | 1.254 | 103.60 | 2160 | 70.0 | 108.40 | 1950 | 70.0 |
| Al | 1.487 | 66.16 | 1170 | 50.0 | 68.32 | 1130 | 50.0 |
| Si | 1.740 | 46.58 | 43100 | 400 | 45.27 | 44600 | 500.0 |
| P | 2.010 | 39.64 | 210 | 30.0 | 38.32 | 2800 | 30.0 |
| S | 2.308 | 15.11 | 2150 | 30.0 | 17.81 | 2180 | 30.0 |
| Cl | 2.622 | 26.48 | 3400 | 40.0 | 13.01 | 3430 | 40.0 |
| K | 3.314 | 28.70 | 2320 | 40.0 | 28.23 | 2440 | 40.0 |
| Ca | 3.692 | 65.08 | 7760 | 90.0 | 72.98 | 7990 | 90.0 |
| Ti | 4.511 | 9.970 | 82.0 | 10.0 | 12.68 | 57.0 | 9.0 |
| Cr | 5.415 | 3.130 | 7.2 | 1.7 | 3.280 | 6.2 | 1.9 |
| Mn | 5.899 | 2.801 | 66.0 | 3.0 | 1.910 | 66.0 | 3.0 |
| Fe | 6.405 | 4.548 | 633.0 | 6.0 | 4.394 | 628.0 | 6.0 |
| Ni | 7.478 | 0.603 | 3.4 | 0.5 | 0.635 | 4.1 | 0.5 |
| Cu | 8.048 | 0.521 | 31.0 | 1.0 | 0.742 | 30.0 | 1.0 |
| Zn | 8.639 | 0.846 | 29.0 | 1.0 | 0.297 | 27.0 | 1.0 |
| Br | 11.924 | 1.801 | 35.0 | 2.0 | 2.015 | 36.0 | 2.0 |
| Sr | 14.165 | 2.115 | 21.0 | 2.0 | 2.471 | 25.0 | 3.0 |

### CRMs analysis by INAA

The CRM was analyzed using INAA. The results are shown in table 9.

**Table 9: Duplicate elements concentrations, SD and LOD (µg/g) in date palm leaf composition obtained by INAA**

| **Element** | **R1** | **R2** | **SE** | **LOD** |
|---|---|---|---|---|
| Na | 1053 | 1027 | 0.8 | 2.3 |
| K | 3210 | 3310 | 4.0 | 330 |
| Cr | 10.37 | 9.78 | 1.1 | 0.21 |
| Fe | 691 | 692 | 1.1 | 13.0 |
| Ni | < LOD | < LOD | - | 11.0 |
| Zn | 34.6 | 34.4 | 2.0 | 1.0 |
| Cd | < LOD | < LOD | - | 0.44 |
| Mg | 1920 | 2000 | 2.0 | 57 |
| Ca | 10420 | 1067 | 1.2 | 130 |
| Mn | 88.3 | 85.4 | 0.8 | 0.18 |
| Co | 0.395 | 0.394 | 3.0 | 0.038 |
| Cu | 35.0 | 40.0 | 10.0 | 12.0 |
| As | 0.52 | 0.45 | 8.0 | 0.069 |

### CRMs analysis by ICP-OES

The CRM was analyzed using ICP-OES. The results are shown in table 10.

**Table 10: Duplicate elements concentrations (µg/g) in date palm leaf composition obtained by ICP-OES**

| **Element** | **C1** | **C2** | **Element** |
|---|---|---|---|
| Cd | < 1.0 | < 1.0 | - |
| Ca | 8370 | 4640 | 2637.51 |
| Cr | 6.6 | 7.8 | 0.85 |
| Cu | 28.3 | 29.3 | 0.71 |
| Fe | 461 | 551 | 63.64 |
| Pb | < 1.0 | 1.3 | - |
| Mg | 1440 | 828 | 432.75 |
| Mn | 61.3 | 71.6 | 7.28 |
| P | 3,410,000 | 4,090,000 | 480,832.61 |
| K | 2410 | 1320 | 770.75 |
| Na | 746 | 418 | 231.93 |
| Zn | 22.8 | 27.3 | 3.18 |

### CRMs analysis by INAA

The CRM was analyzed using INAA. The results are shown in table 11.

**Table 11: Duplicate elements concentrations (µg/g) in date palm leaf obtained by INAA**

| **Element** | **C1** | **SD** | **C2** | **SD** |
|---|---|---|---|---|
| Ca | 9961 | 365 | 9708 | 348 |
| Cr | 9.48 | 0.34 | 10.03 | 0.35 |
| Fe | 672 | 24 | 6₇2 | 24 |
| K | 3291 | 116 | 3276 | 116 |
| Na | 1046 | 37 | 1065 | 37 |
| Zn | 35.1 | 1.3 | 35.2 | 1.2 |

### CRMs analysis by INAA

The CRM was analyzed using INAA. The results are shown in table 12.

**Table 12: Duplicate elements concentrations (µg/g) in CRMs of leaves of date palm obtained by INAA**

| **Element** | **LOD** | **leaves of date palm** | |
|---|---|---|---|
| | | **C1** | **C2** |
| As | 0.5 | - | - |
| Co | 1.0 | - | - |
| Cr | 5.0 | 15 | 10 |
| Na | 100 | 1200 | 1000 |
| Ni | 20.0 | - | - |
| Zn | 50.0 | 60 | 50 |
| Fe | 100 | 1000 | 1100 |
| Ca | 10000 | 1 | 2 |
| Mn | 0.1 | 81 | 91 |
| Al | 1.0 | - | - |
| Mg | 500 | 2600 | 2400 |

### CRMs analysis by ICP-MS

The CRM was analyzed using ICP-MS. The results are shown in table 13.

**Table 13: Duplicate elements concentrations (µg/g) in CRMs of leaves of date palm obtained by ICP-MS**

| **Element** | **LOD** | **leaves of date palm** | |
|---|---|---|---|
| | | **C1** | **C2** |
| Na | 100 | 1000 | 1000 |
| Mg | 100 | 1800 | 1700 |
| K | 100 | 3300 | 3200 |
| Ca | 100 | 10800 | 10100 |
| Cd | 0.1 | < 0.1 | < 0.1 |
| Cr | 0.5 | 10.3 | 9.2 |
| Mn | 1 | 97 | 90 |
| Fe | 100 | 700 | 700 |
| Ni | 0.5 | - | - |
| Zn | 0.2 | 35.9 | 34.4 |
| As | 0.1 | - | - |
| Cu | 0.2 | 34.6 | 31.8 |
| Pb | 0.5 | 1.1 | 0.9 |
| P | 10 | 360 | 430 |

### CRMs analysis by AAS

The CRM was analyzed using AAS. The results are shown in table 14.

**Table 14: Elements concentrations (µg/g) in date palm leaf composition obtained from triplicate independent analysis by AAS**

| **Elements** | **C1** | **C2** | **C3** | **Mean** |
|---|---|---|---|---|
| Cr | 0.37 | 0.37 | 0.37 | 0.37 |
| Mn | 5.11 | 5.06 | 5.2 | 5.12 |
| Fe | 43.4 | 43.66 | 43.27 | 43.44 |
| Cu | 3.4 | 3.25 | 3.46 | 3.37 |
| Zn | 8.59 | 8.73 | 8.36 | 8.56 |
| Cd | 0.60 | 0.60 | 0.59 | 0.60 |
| Pb | 4.25 | 4.18 | 4.2 | 4.21 |
| Ca | 599.99 | 600.04 | 599.98 | 600.0 |
| K | 5835.6 | 5835.5 | 5835.81 | 5835.6 |
| Mg | 557.35 | 557.31 | 557.37 | 557.3 |
| Na | 385.47 | 385.47 | 385.29 | 385.41 |
| P | 364.19 | 364.50 | 363.50 | 364.06 |

### CRMs analysis by ICP-MS

The CRM was analyzed using ICP-MS. The results are shown in table 15.

**Table 15: Element concentrations and uncertainty (µg/g) in CRMs of date palm leaf composition obtained by ICP-MS**

| **Element** | **leaves of date palm** |
|---|---|
| Ca | 0.976 ± 0.051 |
| Cd | 0.025 ± 0.002 |
| Cr | 9.02 ± 1.99 |
| Cu | 32.5 ± 3.2 |
| Fe | 626 ± 75 |
| K | 0.300 ± 0.019 |
| Mg | 0.173 ± 0.005 |
| Mn | 81.1 ± 4.7 |
| Na | 928 ± 47 |
| P | 385 ± 12 |
| Pb | 0.716 ± 0.043 |
| Zn | 32.4 ± 3.5 |
| Ni | - |

### CRMs analysis by different techniques

The data obtained from analyses using a broad spectrum of different techniques were compared. The results of the analysis is shown in Table 16.

**Table 16: Element concentrations and mean (µg/g) in date palm leaf composition obtained by different elemental analysis techniques**

| **Element** | **C1** | **C2** | **C3** | **Mean** |
|---|---|---|---|---|
| Fe | 270.58 | 301.49 | 297.15 | 289.74 |
| Mn | 51.25 | 53.42 | 52.43 | 52.37 |
| Cu | 58.38 | 64.38 | 61.75 | 61.50 |
| Zn | 67.85 | 93.48 | 82.7 | 81.34 |
| Cd | 16.83 | 19.14 | 17.9 | 17.96 |
| Pb | 235.01 | 256.21 | 248.26 | 246.49 |
| Mg | 1030.14 | 1055.93 | 1034.97 | 1040.35 |
| K | 24.29 | 27.35 | 25.92 | 25.85 |
| Na | 49.12 | 38.82 | 42.58 | 43.51 |
| Ca | 45.28 | 70.o8 | 57.28 | 57.55 |

The above analyses show that the date palm leaf composition is a homogeneous composition comprising a defined amount of elements such as Na, Mg, P, K, Ca, Cr, Mn, Fe, Cu, and Zn. Using a multitude of techniques and tests, it was shown that the date palm leaf composition is homogenous and comprises Na in an amount of from 833.6 µg/g to 1100.0 µg/g, Mg in an amount of from 1040.4 µg/g to 1960.0 µg/g, P in an amount of from 317.8 µg/g to 410 µg/g, K in an amount of from 2380.0 µg/g to 3283.5 µg/g, Ca in an amount of from 976.0 µg/g to 15000.0 µg/g, Cr in an amount of from 7.2 µg/g to 13.0 µg/g, Mn in an amount of from 73.4 µg/g to 93.5 µg/g, Fe in an amount of from 506.0 µg/g to 691.5 µg/g, Cu in an amount of from 28.8 µg/g to 37.5 µg/g, and Zn in an amount of from 25.1 µg/g to 39.8 µg/g.

### Example 6: Certified values

The results obtained in the analyses as described above were analyzed for consistency between the measurements. It was demonstrated that the composition of the invention comprises Na, Mg, P, K, Ca, Cr, Mn, Fe, Cu, and Zn in the amounts specified in Table 17.

The certified values are presented for the total contents, addressed as mass fractions (µg/g), of some macro (magnesium, potassium, and calcium), micro (sodium, phosphorus, and iron), and trace elements (chromium, manganese, copper, and zinc). The certified values are shown in Table 17. The values are based on the agreement of results obtained using various elemental analytical techniques, which are listed in Table 18.

**Table 17: Certified values (µg/g) of elements in CRM:KKU-302**

| **Element** | **Mean** | **Uncertainty** | **Range** |
|---|---|---|---|
| Sodium | 974.0 | 321.3 | 833.6-1100.0 |
| Magnesium | 1564.9 | 32.4 | 1040.4-1960.0 |
| Phosphorus | 379.5 | 297.0 | 317.8-410.0 |
| Potassium | 3006.4 | 3474.2 | 2380.0-3283.5 |
| Calcium | 9097.2 | 1.7 | 976.0-15000.0 |
| Chromium | 9.8 | 6.5 | 7.2-13.0 |
| Manganese | 82.8 | 72.0 | 73.4-93.5 |
| Iron | 592.3 | 2.6 | 506.0-691.5 |
| Copper | 32.5 | 4.3 | 28.8-37.5 |
| Zinc | 32.7 | 0.8 | 25.1-39.8 |

**Table 18: Elemental analysis of CRM:KKU-302**

| **Abbreviation** | **Technique** |
|---|---|
| ICP-MS | Inductively coupled plasma- mass spectrometry |
| INAA | Instrumental neutron activation analysis |
| PIXE | particle-induced X-ray emission |
| WD-XRF | wavelength-dispersive-X □ray fluorescence spectrometry |
| ICP-OES | Inductively coupled plasma-optical emission spectrometry |
| ICP-SFMS | Inductively coupled plasma-sector field mass spectrometry |
| ko-INAA | ko-based instrumental neutron activation analysis |
| AAS | Atomic absorption spectrometry |
| EDX | Energy dispersive X-ray spectroscopy |
| RBS | Rutherford backscattering spectrometry |
| SEM | Scanning electron microscopy |
| XRD | X-ray diffraction |

Using various techniques, it was shown that the date palm leaf composition homogenously comprises the elements shown in Table 17 in the specified amounts (see value ranges).

### Example 7: Stability test

The analysis using ICP OES (inductively coupled plasma optical emission spectrometry) and ICP-SFMS (inductively coupled plasma sector field mass spectrometry) showed that the date palm leaf composition is stable. The CRM is stable for at least five years because of a high radiation dose applied as well as the nature of the certified analytes (inorganics).

**Table 19: Mean of elements concentration (mg/kg) and relative standard deviation (RSD%) of independent duplicate measurements and stability of date palm leaf composition**

| **CRM** | **Element** | **Initial** | | **Final (1 year after** initial) | |
|---|---|---|---|---|---|
| | | **Mean** | **RSD (%)** | **Mean** | **RSD (%)** |
| leaves of date palm | Ca | 10085 | 0.9 | 9805 | 1.4 |
| | Cd | 0.02328 | 1.9 | 0.0275 | 18.0 |
| | Cr | 9.815 | 2.2 | 16.7 | 7.6 |
| | Cu | 33.74 | 0.2 | 31.85 | 0.2 |
| | Fe | 705.68 | 0.6 | 682.5 | 1.1 |
| | K | 3075 | 0.2 | 2505 | 0.8 |
| | Mg | 1800 | 5.5 | 1590 | 2.7 |
| | Mn | 84.015 | 1.5 | 80.25 | 2.6 |
| | Na | 851.445 | 2.3 | 900 | 2.4 |
| | P | 394.045 | 3.1 | 367.500 | 6.3 |

### Example 8: Homogeneity of element content in the CRM of date palm leaf

Instrumentation Neutron Activation Analysis was performed to assess between-bottle homogeneity of element content in the date palm leaf composition. The analysis showed a low standard deviation between the bottles. The composition is thus a homogeneous composition.

**Table 20. Between-bottle homogeneity of element content in the date palm leaf composition measured by Instrumentation Neutron Activation Analysis (INAA)**

| **Element** | **RSD%^{a}** |
|---|---|
| Na | 1.04 |
| K | 78.28 |
| Cr | 2.35 |
| Fe | 0.10 |
| Zn | 0.29 |
| Mg | 1.66 |
| Ca | 0.96 |
| Mn | 1.40 |
| Co | 43.72 |
| Cu | 5.48 |
| As | 5.60 |

| | |
|---|---|
| a Relative standard deviation | |

The features of the present invention disclosed in the specification, the claims, and/or in the accompanying figures may, both separately and in any combination thereof, be material for realizing the invention in various forms thereof.

## Claims

1. A composition comprising a date palm leaf or component(s) thereof, wherein said composition is a homogenized, irradiated composition.

2. The composition according to claim 1, wherein said composition is a powder, granules, pulp, paste, dispersion, or suspension, preferably a powder.

3. The composition according to claim 1 or 2, wherein said composition is a composition irradiated with ionizing irradiation, preferably gamma ray irradiation, x-ray irradiation, and/or electron beam irradiation.

4. The composition according to any one of the foregoing claims, wherein said composition comprises
Na in an amount of from 750 µg/g to 1200 µg/g, preferably 820 µg/g to 1115 µg/g, e.g. about 830 µg/g to about 1100 µg/g;
Mg in an amount of from 900 µg/g to 2200 µg/g, preferably 1020 µg/g to 2000 µg/g, e.g. about 1040 µg/g to about 1960 µg/g;
P in an amount of from 280 µg/g to 450 µg/g, preferably 300 µg/g to 430 µg/g, e.g. about 315 µg/g to about 410 µg/g;
K in an amount of from 400 µg/g to 6000 µg/g, preferably 515 µg/g to 5860 µg/g, e.g. about 2380 µg/g to about 3290 µg/g;
Ca in an amount of from 900 µg/g to 16000 µg/g, preferably 960 µg/g to 15150 µg/g, e.g. about 970 µg/g to about 15000 µg/g;
Cr in an amount of from 6 µg/g to 15 µg/g, preferably 7 µg/g to 13.4 µg/g, e.g. about 7.2 µg/g to about 13.0 µg/g;
Mn in an amount of from 70 µg/g to 98 µg/g, preferably 72 µg/g to 95 µg/g, e.g. about 73 µg/g to about 94 µg/g;
Fe in an amount of from 400 µg/g to 850 µg/g, preferably 450 µg/g to 800 µg/g, e.g. about 500 µg/g to about 700 µg/g;
Cu in an amount of from 25 µg/g to 45 µg/g, preferably 27 µg/g to 40 µg/g, e.g. about 28 µg/g to about 38 µg/g; and/or
Zn in an amount of from 20 µg/g to 45 µg/g, preferably 23 µg/g to 42 µg/g, e.g. about 25 µg/g to about 40 µg/g.

5. The composition according to any one of the foregoing claims, wherein said composition comprises
Na in an amount of from 833.6 µg/g to 1100.0 µg/g;
Mg in an amount of from 1040.4 µg/g to 1960.0 µg/g;
P in an amount of from 317.8 µg/g to 410 µg/g;
K in an amount of from 2380.0 µg/g to 3283.5 µg/g;
Ca in an amount of from 976.0 µg/g to 15000.0 µg/g;
Cr in an amount of from 7.2 µg/g to 13.0 µg/g;
Mn in an amount of from 73.4 µg/g to 93.5 µg/g;
Fe in an amount of from 506.0 µg/g to 691.5 µg/g;
Cu in an amount of from 28.8 µg/g to 37.5 µg/g; and/or
Zn in an amount of from 25.1 µg/g to 39.8 µg/g.

6. The composition according to any one of the foregoing claims, wherein said date palm leaf is of a species selected from *Phoenix dactylifera, Phoenix acaulis, Phoenix atlantica, Phoenix caespitosa, Phoenix canariensis, Phoenix loureiroi, Phoenix paludosa, Phoenix pusilla, Phoenix reclinata, Phoenix roebelenii, Phoenix rupicola, Phoenix sylvestris, Phoenix theophrasti;* preferably *Phoenix dactylifera;* more preferably *Phoenix dactylifera* L.

7. The composition according to any one of the foregoing claims, wherein said date palm leaf is of a variety selected from *Kholas, Ajwah, Al-Khunaizi, Amir Hajj, Bouffegous, Dabbas, Datça, Dayri, Empress, Fardh, Ftimi, Holwah, Haleema, Hayany, Iteema, Kenta, Khadrawi, Khastawi, Khenaizi, Lulu, Medjool, Mishriq, Mazafati, Nabtat-seyf, Piarom, Safawi, Sag'ai, Saidy, Sayer, Safrir, Sukkary, Sellaj, Indi, Tagyat, Tamej, Thoory, Umeljwary, Umelkhashab, Zahidi,* and *Zaghloul;* preferably *Kholas.*

8. The composition according to any one of the foregoing claims, wherein said composition comprises nitrogen, oxygen, and silicon in a ratio of 18-23 : 30-35 : 18-23, preferably in a ratio of 20-21 : 32.5-33.5 : 20-21, e.g. about 20.6 : 32.9 : 20.4, respectively.

9. The composition according to any one of the foregoing claims, wherein said composition comprises or consists of particles having a particle size ≤ 500 µm.

10. The composition according to any one of the foregoing claims, wherein the composition has a particle size distribution **characterized by**
5% to 15%, e.g. about 11%, of the particles having a particle size of < 20 µm,
40% to 60%, e.g. about 51%, of the particles having a particle size in the range of from 20 µm to 50 µm,
20% to 40%, e.g. about 33%, of the particles having a particle size in the range of from 50 µm to 100 µm,
1% to 5%, e.g. about 3%, of the particles having a particle size in the range of from 100 µm to 150 µm,
1% to 5%, e.g. about 2%, of the particles having a particle size in the range of from 150 µm to 200 µm, and/or
0.1% to 3%, e.g. about 1%, of the particles having a particle size in the range of from 200 µm to 500 µm.

11. The composition according to any one of the foregoing claims, wherein said composition is a reference material, preferably a certified reference material, more preferably a certified reference material of date palm leaf elemental composition.

12. The composition according to any one of the foregoing claims, wherein said leaf is a pinnate leaf or palmate leaf, preferably pinnate leaf.

13. Use of a composition of any one of claims 1-12 as a reference material, e.g. certified reference material, preferably for analyzing food quality and/or environmental pollution.

14. A method of preparing a homogenized, irradiated composition comprising a date palm leaf or component(s) thereof, preferably a composition of any one of claims 1-12, wherein said method comprises the steps:
a) providing a date palm leaf;
b) optionally, drying said date palm leaf, e.g. by freeze drying, heat drying, or vacuum drying, preferably heat drying in an oven at a temperature of from 40°C to 90°C, e.g. about 70°C;
c) homogenizing said date palm leaf to obtain a homogenized mixture; optionally by using a grinder;
d) irradiating said homogenized mixture of step c) to obtain an irradiated mixture, preferably by gamma ray irradiation, x-ray irradiation, and/or electron beam irradiation;
e) homogenizing said irradiated mixture of step d), preferably by using a grinder;
f) obtaining a homogenized, irradiated composition; preferably a homogenized, irradiated composition in the form of a powder;
g) optionally, storing said homogenized, irradiated composition in a light protected container.

15. The method according to claim 14, wherein said irradiating in step d) comprises subjecting said homogenized mixture of step c) to irradiation, e.g. ionizing irradiation, preferably gamma ray irradiation, x-ray irradiation, and/or electron beam irradiation; wherein, preferably, an ionizing radiation dose absorbed by said homogenized mixture is in the range of from 1 kGy to 100 kGy, preferably 5 kGy to 50 kg, more preferably 10 kGy to 40 kGy, even more preferably 15 kGy to 35 kGy, e.g. about 25 kGy.
